(19) Europäisches Patentamt / European Patent Office / Office européen des brevets

(11) **EP 4 502 959 A1**

(12) **EUROPEAN PATENT APPLICATION**
published in accordance with Art. 153(4) EPC

(43) Date of publication:
05.02.2025 Bulletin 2025/06

(21) Application number: 23807908.1

(22) Date of filing: 17.05.2023

(51) International Patent Classification (IPC):
*G06T 19/00* (2011.01)   *G06T 19/20* (2011.01)
*G06T 3/00* (2024.01)   *G06T 5/50* (2006.01)
*G06F 3/01* (2006.01)

(52) Cooperative Patent Classification (CPC):
G06V 20/20; G06F 3/01; G06T 19/006; G06V 10/82

(86) International application number:
PCT/KR2023/006699

(87) International publication number:
WO 2023/224389 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.05.2022  KR 20220061034
29.09.2022  KR 20220124660

(71) Applicant: Samsung Electronics Co., Ltd.
Suwon-si, Gyeonggi-do 16677 (KR)

(72) Inventors:
• JI, Seowon
Suwon-si, Gyeonggi-do 16677 (KR)

• JEONG, Jaeyun
Suwon-si, Gyeonggi-do 16677 (KR)
• KIM, Songhyeon
Suwon-si, Gyeonggi-do 16677 (KR)
• KIM, Hyokak
Suwon-si, Gyeonggi-do 16677 (KR)
• PARK, Sungjae
Suwon-si, Gyeonggi-do 16677 (KR)
• SHIN, Seunghak
Suwon-si, Gyeonggi-do 16677 (KR)
• JUNG, Haekyung
Suwon-si, Gyeonggi-do 16677 (KR)
• CHOI, Sooryum
Suwon-si, Gyeonggi-do 16677 (KR)

(74) Representative: Appleyard Lees IP LLP
15 Clare Road
Halifax HX1 2HY (GB)

(54) **METHOD AND DEVICE FOR GENERATING AR VIEW**

(57) A method, performed by a first electronic device, of generating an augmented reality (AR) view for a first user includes obtaining an image of a space captured by a second electronic device and AR experience information of a second user about at least one AR object in the space. A method, by a first electronic device, of generating an AR view for a first user includes obtaining at least one path for generating an AR view based on the image of the space and the AR experience information of the second user. A method, by a first electronic device, of generating an AR view for a first user includes generating an AR view based on the at least one path. A method, by a first electronic device, of generating an AR view for a first user includes outputting the generated AR view.

FIG. 5

```
OBTAIN SPACE IMAGE CAPTURED BY SECOND
ELECTRONIC DEVICE AND AR EXPERIENCE OF
SECOND USER ABOUT AT LEAST ONE
AUGMENTED REALITY (AR) OBJECT IN SPACE          — 501

                    ↓

OBTAIN AT LEAST ONE PATH FOR GENERATING
AR VIEW BASED ON SPACE IMAGE AND
AR EXPERIENCE INFORMATION OF SECOND USER       — 502

                    ↓

GENERATE AR VIEW BASED ON AT LEAST ONE PATH    — 503

                    ↓

OUTPUT AR VIEW GENERATED                        — 504
```

EP 4 502 959 A1

**Description**

TECHNICAL FIELD

The disclosure relates to a method and apparatus for generating an augmented reality (AR) view for an AR experience.

BACKGROUND ART

Augmented reality (AR) may refer to showing a virtual image or both real and virtual object images in a physical environment space of the real word. An AR experience may refer to the use of an AR technology to allow a user to experience AR. The AR experience may allow the user to recognize and sense a world that the user has not actually experienced, thereby extending user experience without a boundary between reality and virtual reality. Furthermore, an experience of a user who directly obtains the AR experience from a real space may be shared with another user, so that an experience of a particular user may be extended to the other user without time and space constraints.

DESCRIPTION OF EMBODIMENTS

SOLUTION TO PROBLEM

Provided is a method, performed by a first electronic device, of generating an augmented reality (AR) view for a first user includes obtaining an image of space captured by a second electronic device and AR experience information of a second user about at least one AR object in the space.

According to an embodiment of the disclosure, a method, by a first electronic device, of generating an AR view for a first user includes obtaining at least one path for generating an AR view based on the image of the space and the AR experience information of the second user. According to an embodiment of the disclosure, a method, by a first electronic device, of generating an AR view for a first user includes generating an AR view based on the at least one path. According to an embodiment of the disclosure, a method, by a first electronic device, of generating an AR view for a first user includes outputting the generated AR view.

According to an embodiment of the disclosure, a first electronic device for generating an AR view for a first user includes a display, a communication module, a storage storing a program including at least one instruction, and at least one processor configured to execute the at least one instruction stored in the storage. The at least one processor may be configured to execute the at least one instruction to obtain an image of a space captured by a second electronic device and AR experience information of a second user about at least one AR object in the space. The at least one processor may be configured to execute the at least one instruction to obtain at least one path for generating an AR view based on the image of the space and the AR experience information of the second user. The at least one processor may be configured to execute the at least one instruction to generate an AR view based on the at least one path. The at least one processor may be configured to execute the at least one instruction to output the generated AR view on a display.

According to an embodiment of the disclosure, a computer-readable recording medium having recorded thereon a program for performing the aforementioned method is provided.

BRIEF DESCRIPTION OF DRAWINGS

The above and other aspects, features, and advantages of certain embodiments of the present disclosure will be more apparent from the following description taken in conjunction with the accompanying drawings, in which:

FIG. 1 illustrates an augmented reality (AR) view, according to an embodiment of the disclosure.
FIG. 2A illustrates an AR view of a second user and a display of a second electronic device, according to an embodiment of the disclosure.
FIG. 2B illustrates an AR view of a first user and a display of a first electronic device, according to an embodiment of the disclosure.
FIG. 3 is a block diagram of an electronic device, according to an embodiment of the disclosure.
FIG. 4 is a block diagram of an artificial intelligence (AI) server, according to an embodiment of the disclosure.
FIG. 5 is a flowchart of a method, performed by a first electronic device, of providing an AR view, according to an embodiment of the disclosure.
FIGS. 6A to 6D are diagrams for describing a method of determining a path for an AR experience in a space model including an AR object, according to an embodiment of the disclosure.
FIGS. 7A and 7B are diagrams for describing a method of generating a space view, according to an embodiment of the disclosure.

FIGS. 8A and 8B are diagrams for describing a method of generating an object view, according to an embodiment of the disclosure.

FIG. 9 illustrates a method of generating an AR view, according to an embodiment of the disclosure.

FIGS. 10A and 10B are diagrams for describing a method of recommending an object in a method of providing an AR view, according to an embodiment of the disclosure.

FIG. 11 is a flowchart of a method of generating an AR view by using an AI server in an AR view generation system, according to an embodiment of the disclosure.

MODE OF DISCLOSURE

Embodiments of the disclosure will now be described with reference to accompanying drawings to assist those of ordinary skill in the art in readily implementing them. Technological content well-known in the art or not directly related to the disclosure may be omitted in the following description for convenience of description. Some parts in the accompanying drawings may be exaggerated, omitted or schematically illustrated. The size of the respective elements may not fully reflect their actual size.

However, the embodiments of the disclosure may be implemented in many different forms, and are not limited thereto, as will be discussed herein. In the drawings, parts unrelated to the description may be omitted for clarity, and like numerals refer to like elements throughout the specification.

Throughout the disclosure, the expression "at least one of a, b or c" indicates only a, only b, only c, both a and b, both a and c, both b and c, all of a, b, and c, or variations thereof.

Advantages and features of the disclosure, and methods for attaining them may be understood more clearly with reference to example embodiments of the disclosure, which are described in detail below along with the accompanying drawings. Embodiments of the disclosure may, however, take many different forms, and the disclosure should not be construed as being limited to the embodiments set forth herein.

It may be understood that respective blocks and combinations of the blocks in processing flowcharts will be performed by computer program instructions. The computer program instructions may be loaded on a processor of a universal computer, a special-purpose computer, or other programmable data processing equipment, and thus they may perform functions described in the block(s) of the flowcharts when executed by the processor of the computer or other programmable data processing equipment. The computer program instructions may also be stored in computer-usable or computer-readable memories oriented for computers or other programmable data processing equipment, so it is possible to manufacture a product that contains instructions for performing functions described in the block(s) of the flowchart. The computer program instructions may also be loaded on computers or programmable data processing equipment, so it is possible for the instructions to generate a process executed by the computer or the other programmable data processing equipment to provide steps for performing functions described in the block(s) of the flowchart.

Furthermore, each block may represent a part of a module, segment, or code including one or more executable instructions to perform particular logic function(s). It is noted that the functions described in the blocks may occur out of order in some alternative embodiments. For example, two successive blocks may be performed substantially at the same time or in reverse order.

Furthermore, the term 'unit' or 'module' as herein used may refer to a software or hardware component, such as field programmable gate array (FPGA) or application specific integrated circuit (ASIC) which plays a certain role. However, the module is not limited to software or hardware. The module may be configured to be stored in an addressable storage medium, or to execute one or more processors. For example, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and modules may be combined into a smaller number of components and modules, or further divided into a larger number of components and modules. Moreover, the components and modules may be implemented to execute one or more central processing units (CPUs) in a device or security multimedia card. In embodiments of the disclosure, the module may include one or more processors.

Functions related to artificial intelligence (AI) according to the disclosure are operated through a processor and a memory. There may be one or more processors. The one or more processors may include a universal processor such as a CPU, an AP, a digital signal processor (DSP), etc., a GPU, a vision processing unit (VPU), etc., or a dedicated AI processor such as a neural processing unit (NPU). The one or more processors may control processing of input data according to a predefined operation rule or an AI model stored in the memory. When the one or more processors are the dedicated AI processors, they may be designed in a hardware structure that is specific to dealing with a particular AI model.

The predefined operation rule or the AI model may be made by learning. This may refer to the predefined operation rule or the AI model established to perform a desired feature (or an object) being made when a basic AI model is trained by a learning algorithm with a lot of training data. Such learning may be performed by a device itself in which AI is performed according to the disclosure, or by a separate server and/or system. Examples of the learning algorithm may include supervised learning, unsupervised learning, semi-supervised learning, or reinforcement learning, without being limited thereto.

The AI model may include a plurality of neural network layers. Each of the plurality of neural network layers may have a plurality of weight values, and may perform neural network operation through operation between an operation result of the previous layer and the plurality of weight values. The plurality of weight values corresponding to the plurality of neural network layers may be optimized by learning results of the AI model. For example, the plurality of weight values may be updated to reduce or minimize a loss value or a cost value obtained by the AI model during a training procedure. An artificial neural network may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or a deep Q-network, without being limited thereto.

In the disclosure, a server may refer to a computer system for providing information or a service to a user equipment (UE) or a client through a network, and may refer to a server program or a device. The server may monitor or control the whole network, such as file management, or allow the network to be connected to another network via a main frame or a public network. The server may enable a software resource such as data, a program, a file, etc., or a hardware resource such as a modem, a fax, a router, etc., to be shared. The server may provide a service at the request of a user (a client). In the server, one or more application programs may be operated in a distributed fashion in a cooperative environment.

In the disclosure, augmented reality or AR may refer to showing a virtual image or both real and virtual object images in a physical environment space of a real word. In an AR dedicated electronic device such as AR glasses, a real object seen through a see-through display, which may be for example a transparent or translucent display, and a virtual object image displayed on the display of the device may be viewed together. In a mobile device, a real object captured by a camera and a virtual object may be displayed together on the display. Unlike virtual reality (VR) where images, backgrounds, surrounding conditions, things, etc., are all virtual images, backgrounds, surrounding conditions, things, etc., are real objects and only additional information is virtual in AR. The AR may further enhance effects of reality while providing the additional information, and may thus be applied in various industrial areas.

An AR experience may refer to the use of the AR technology for a user to experience AR. The AR experience may allow the user to recognize and sense a world that the user has not actually experienced with, thereby extending user experience without a boundary between reality and virtual reality.

The AR experience may include all interactions of a user related with AR objects in an AR space. For example, in a case of placing an AR object in an image of a real space captured by the user through a camera, AR experience information may include identification information of the AR object placed (e.g., a type, a model, color, etc.), arrangement information of the AR object placed (e.g., a position, a direction, etc.), identification information of an AR object considered to be placed, and arrangement information of the AR object considered to be placed.

An AR view may refer to an overlay view in which a virtual object image is placed onto a real object image captured by the camera.

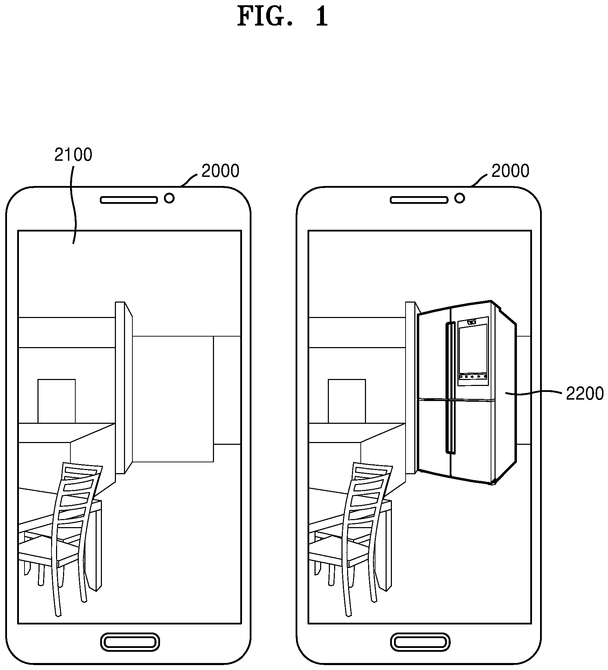

FIG. 1 illustrates an AR view, according to an embodiment of the disclosure.

Referring to FIG. 1, the AR view refers to an overlay image in which a virtual object image 2200 is placed onto a real object image 2100 captured by a camera of a second electronic device 2000.

A real object may refer to an object located in such a space as the space where the second electronic device 2000 is actually located, and the real object image 2100 may be a still image or a moving image (for example a video). A virtual object may refer to an AR object that is not present in a real space, and the virtual object image 2200 may be an image or a three-dimensional (3D) object model obtained from an external device (e.g., a server) or stored in a storage of the second electronic device 2000.

For example, when an electronic device user wants to purchase a new home appliance, the electronic device user may use the AR view to place a virtual product in the real space and determine whether it fits the space, or if it is possible to be placed in a desired space.

When the electronic device user activates the camera and selects a desired product at a desired position while capturing the space, the electronic device may generate an AR view in which a virtual object of the selected product is placed in the position and provide the AR view to the user. In addition, when the electronic device user activates the camera and captures the space, the size of the space may be automatically measured to determine whether it is possible to place the selected product therein. In embodiments, a proper position to place the selected product may be selected and determined.

An AR experience of a direct user who obtains the direct AR experience in the real space may be shared with another user, so the AR experience may be extended. In embodiments, when the AR experience of the direct user is shared in the format of a video recorded with a space image, an indirect user may appreciate or observe the AR experience of the direct user. In embodiments, when the AR experience space of the direct user is specifically modeled to be virtualized, expensive space capturing equipment may be used, and complicated operation may be performed, in order to provide a satisfactory AR experience of the indirect user.

To extend the AR experience, for example by more effectively extending the AR experience of the direct user to the indirect user, allowing the indirect user to actively represent the AR experience or to change the virtual object, a method of providing an AR view that supports movable viewpoint while keeping image quality may be used.

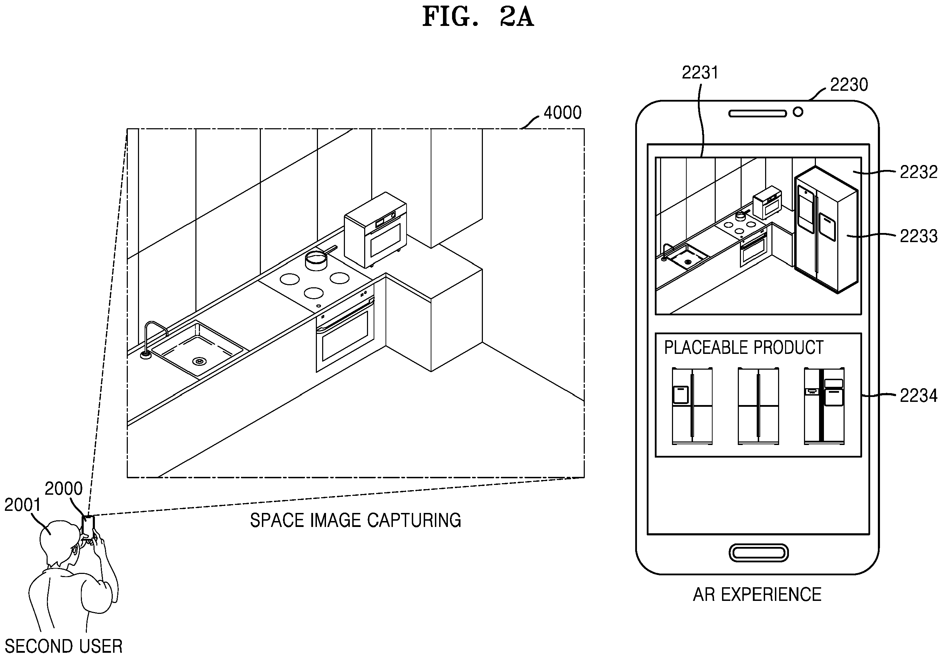

FIG. 2A illustrates an AR view of a second user and a display of a second electronic device, according to an embodiment of the disclosure.

Referring to FIG. 2A, a second user 2001, which may be for example a direct user, may use the second electronic device 2000 to capture a real space 4000 as a video. In an embodiment of the disclosure, a display 2230 of the second electronic device 2000 may include an area 2231 for providing an AR view and an area 2234 for selecting an AR object, and in the area 2231 for providing the AR view, an AR object 2233 may be overlaid and displayed on an image 2232 of the real space 4000.

The second user 2001 may place the selected AR object 2233 in a desired position on the video of the real space 4000 in a desired direction while capturing the real space 4000 in video with the second electronic device 2000. Furthermore, the second electronic device 2000 may provide placeable products in the area 2234 that may replace the AR object 2233 placed in the space, allowing the second user 2001 to more easily change the AR object 2233 to another object so that the second user 2001 may obtain more various AR experiences.

In embodiments, the second user 2001 located in the space in which to place an actual object corresponding to the AR object may obtain an AR experience in the space by placing various AR objects in the real space image in various positions and directions.

When it is possible to share the AR experience of the second user 2001 and information about the space in which the AR experience is obtained with another user, the AR experience may be extended to a user who is in a different place or a user who is unable to check the space image in real time due to a video call, without time and space constraints. Furthermore, when the second user 2001 tries an additional AR experience later, the second user 2001 may add a new AR experience without time and space constraints based on the space image captured by the second electronic device 2000 and the AR experience of the second user 2001.

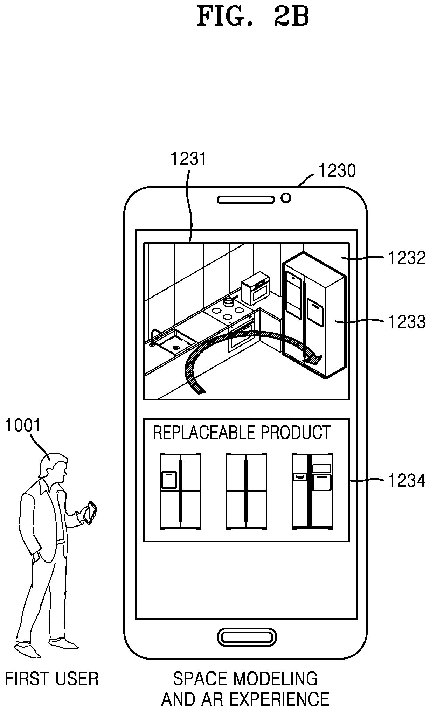

FIG. 2B illustrates an AR view of a first user and a display of a first electronic device, according to an embodiment of the disclosure.

Referring to FIG. 2B, a first electronic device 1000 may obtain the space image captured by the second electronic device 2000 and the AR experience of the second user 2001, and generate and display an AR view based on the obtained space image and the AR experience of the second user.

In an embodiment of the disclosure, a display 1230 of the first electronic device 1000 may include an area 1231 for displaying the AR view, an area 1234 for displaying replaceable AR objects, and an area for displaying a recommended AR object, and in the area 1231 for displaying the AR view, an AR object may be overlaid and displayed on a space model 1232 generated based on the space captured by the second electronic device 2000.

In an embodiment of the disclosure, the AR object overlaid on the space model 1232 generated based on the space image captured by the second electronic device 2000 may be the same AR object 1233 as the AR object placed by the second user, an AR object selected based on the AR experience of the second user, or an AR object selected based on a result of analyzing the space.

In this case, image capturing quality of the space image affects the AR experience of the first user 1001, which may be for example an indirect user. For example, when a space image capturer is unaccustomed to image capturing, the space image may be excessively shaken and the first user 1001 may have difficulty obtaining a satisfactory AR experience from the shared space image itself. Furthermore, when a viewpoint for the AR experience is fixed to the viewpoint of the space image capturer, the space or the AR object may not be observed from a different viewpoint than that of the space image capturer, and when the space image capturer has passed the space to place an AR object while capturing the space image, the first user 1001 may be unable to place the AR object in the desired space.

In an embodiment of the disclosure, a method of providing an AR view may include modeling a space based on a captured space image, AR object information and an AR experience of the second user 2001 and generating an AR view based on a first path (which may be referred to as a space view path) for observing or appreciating the modeled space, thereby enhancing image capturing quality of the space image and giving a stabilized AR experience to the first user 1001.

In an embodiment of the disclosure, a method of providing an AR view may include generating an AR view based on a second path (which may be referred to as an object view path) for observing or appreciating an AR object in the modeled space, thereby reducing data volume to be processed and providing an object view that allows the user to appreciate or observe the AR object in detail.

In an embodiment of the disclosure, a method of providing an AR view may include providing a space view in the first path (or a space view path) for observing or appreciating the space and providing an object view in a second path (or an object view path) for observing or appreciating the AR object, thereby allowing the user to obtain an experience of the AR object in various positions and directions in the space.

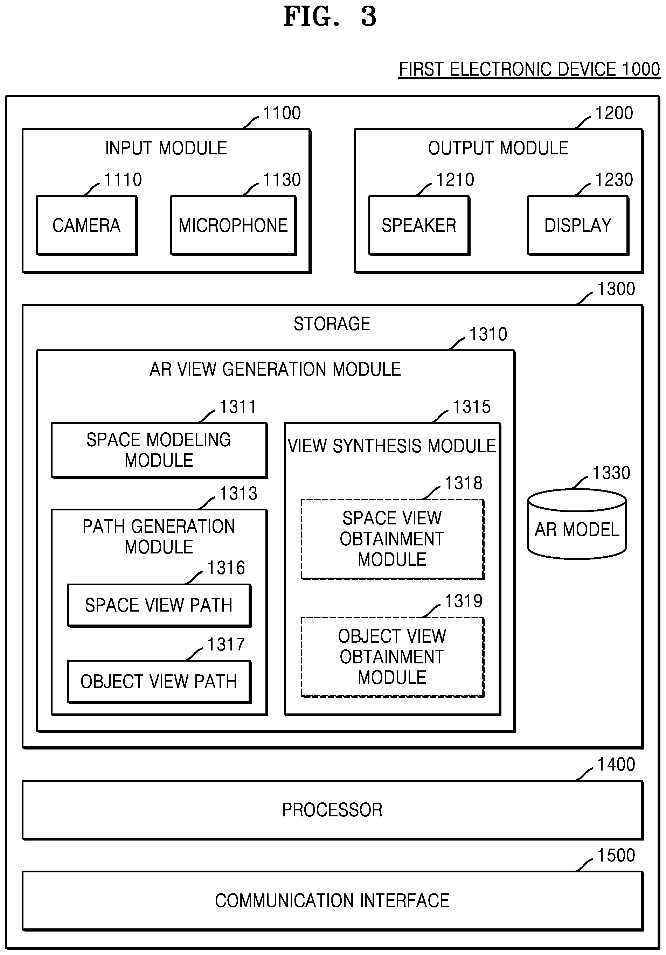

FIG. 3 is a block diagram of an electronic device, according to an embodiment of the disclosure.

Referring to FIG. 3, in an embodiment of the disclosure, a first electronic device 1000 may include an input module 1100, an output module 1200, a storage 1300, a processor 1400, and a communication interface 1500.

In an embodiment of the disclosure, the processor 1400 may refer to at least one processor, which may be understood as a single component for controlling operations of the other components of the first electronic device 1000. In various embodiments of the disclosure, the first electronic device 1000 is not limited to the components shown in FIG. 3, and may include an additional component not shown in FIG. 3 or some of the components shown in FIG. 3 may be omitted. For example, the first electronic device 1000 may further include an extra processor for an artificial intelligence (AI) model, e.g., at least one learning model to obtain a space view or an object view, e.g., a neural processing unit (NPU). Furthermore, at least a portion of a view synthesis module 1315 included in the storage 1300 may be implemented in an extra hardware module instead of a software module stored in the storage 1300.

The input module 1100 may receive data input by the user to control the first electronic device 1000, and include a camera 1110, a microphone 1130, and a button module.

The camera 1110 may be understood to be identical or similar to a camera or a camera module for obtaining an image. In an embodiment of the disclosure, the camera 1110 may include a lens, a proximity sensor and an image sensor. According to various embodiments of the disclosure, the camera 1110 may include multiple cameras or image sensors depending on the function or purpose. For example, the camera 1110 may include a first camera including a wide-angle lens, and a second camera including a telephoto lens.

In an embodiment of the disclosure, the camera 1110 may allow a direct user to capture a space image for an AR experience in a certain space, and the captured space image may be shared with an indirect user.

The microphone 1130 may receive and process a voice or acoustic signal into electric data. For example, the microphone may receive an acoustic signal (e.g., a voice command) from an external device or a talker. The microphone may employ various noise-cancellation algorithms to cancel noise occurring in the course of receiving an external acoustic signal.

The input module 1100 may include a key pad, a dome switch, a (capacitive, resistive, infrared detection type, surface acoustic wave type, integral strain gauge type, piezoelectric effect type) touch pad, a jog wheel, a jog switch, etc., without being limited thereto. In an embodiment of the disclosure, the input module 1100 may include a button module including a power button, a brightness setting button, a reservation setting button, a mode change button, a volume control button, etc.

The output module 1200 may output an audio signal or a video signal. The output module 1200 may include a speaker 1210 and a display 1230.

The speaker 1210 may output audio data received from the communication interface 1500 or stored in the storage 1300. The plurality of speakers may also output a stereo acoustic signal. For example, the plurality of speakers may be implemented with at least one of a right channel speaker, a left channel speaker, or a mono channel speaker. The plurality of speakers may output an acoustic signal related to a function performed by the first electronic device 1000 (e.g., a notification sound, instruction voice, or a guide voice).

The display 1230 may include at least one of a liquid crystal display, a thin film transistor-liquid crystal display, organic light-emitting diodes (OLEDs), a flexible display, a three-dimensional (3D) display, or an electrophoretic display. Furthermore, depending on the form of implementation of the first electronic device 1000, the first electronic device 1000 may include two or more displays 1230.

When the display 1230 and a touch pad are in a layered structure to constitute a touch screen, the display 1230 may also be used not only as the output device but also as an input device.

The storage 1300 may store a program for processing and controlling of the processor 1400. The storage 1300 may include at least one type of storage medium including a flash memory, a hard disk, a multimedia card micro type memory, a card type memory (e.g., a secure digital (SD) or extreme digital (XD) card memory), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, and an optical disk.

Programs stored in the storage 1300 may be classified into multiple modules by their functions, for example, the storage 1300 may store program code or instructions corresponding to an AR view generation module 1310, which may include a space modeling module 1311, a path generation module 1313, and a view synthesis module 1315, and may store an AR object model 1330 in a separate database (DB).

The AR object model 1330 may be provided in advance, for example by a manufacturer of the product that is a target of the AR object, and stored in the first electronic device 1000, and when a 3D model of the AR object is included, there may be no need for extra 3D rendering to generate the AR view.

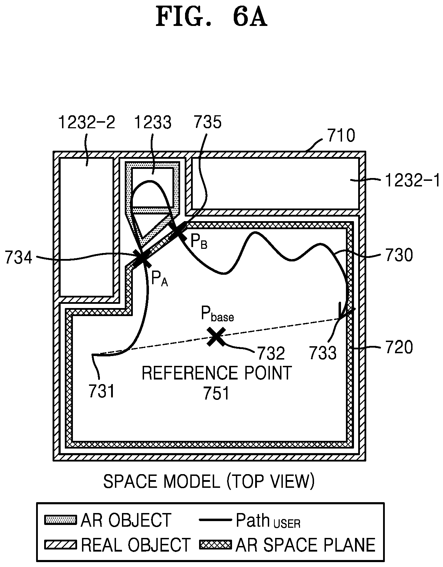

The space modeling module 1311 may model the space including the AR object to generate an AR view. The space model including the AR object may refer to a space model that reflects the AR object not present in the real space. The modeled space may include a real object, the AR object and a space plane. A specific method of modeling a space including an AR object is described below in connection with FIGS. 6A to 6D.

The path generating module 1313 generates at least one path for generating an AR view for an AR experience of the indirect user. The path generating module 1313 may obtain a first path, which may be for example space view path 1316, for a space view based on the space model and the space image, and obtain a second path, which may be for example object view path 1317,based on information about the first path and an AR object. A specific method of obtaining the first path and the second path is described below in connection with FIGS. 6A to 6D.

The view synthesis module 1315 obtains a space view generated based on the first path for observing or appreciating the space and an object view generated based on the second path for observing or appreciating the AR object, and synthesizes the obtained space view and object view to generate an AR view for an AR experience of the indirect user. Technologies used to generate an AR view includes warping and fusion, style transfer, etc.

A space view obtainment module 1318 and an object view obtainment module 1319 may include AI models, and may be included in the view synthesis module 1315. The AI models may be processed by an AI dedicated processor designed in a hardware structure specialized in processing the AI model. The AI models may be made by learning. For example, a predefined operation rule or an AI model being made by learning may refer to the predefined operation rule or the AI model established to perform a desired feature (or an object) being made when a basic AI model is trained by a learning algorithm with a lot of training data. The AI models may include a plurality of neural network layers. Each of the plurality of neural network layers may have a plurality of weight values, and perform neural network operation through operation between an operation result of the previous layer and the plurality of weight values. Inferential prediction may be a technique for determining information and making a logical inference and prediction from the determination, and may include knowledge/probability based reasoning, optimization prediction, preference-based planning, recommendations, etc.

In a method of generating an AR view according to an embodiment of the disclosure, the space view obtainment module 1318 may obtain a space view based on an AI model trained with an input of image frames extracted from the space image to output a space view seen from a certain position in the space. In a method of generating an AR view according to an embodiment of the disclosure, the object view obtainment module 1319 may obtain an AR view based on the AI model trained with an input of an image capturing position and angle extracted from the space image frame to output an image intensity. In a method of generating an AR view according to an embodiment of the disclosure, the object view obtainment module 1319 may obtain an AR view based on the AI model trained with an input of the space image and the AR object model to transform a style of the AR object based on a style feature of the space.

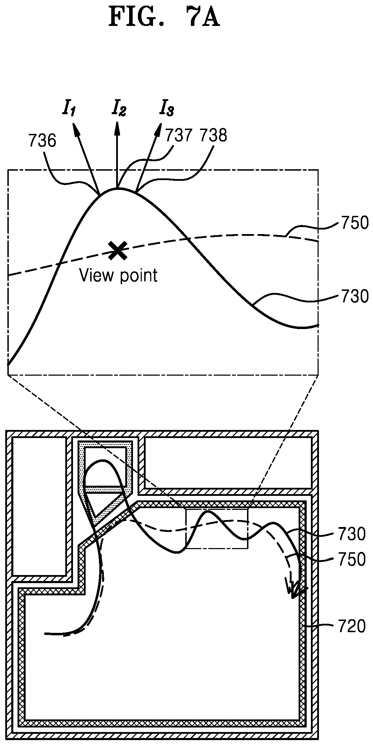

A specific method of generating a space view and an AR view is described below in connection with FIGS. 7A to 8B.

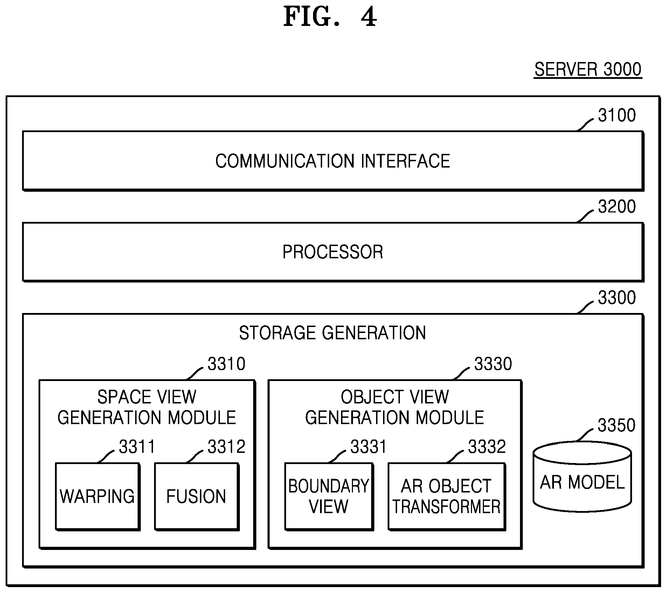

The AI model may be implemented on an on-device basis in the first electronic device 1000, or on a server basis. With the server-based AI model, when the first electronic device 1000 transmits information required to an AI server 3000, the AI server 3000 that has obtained the information performs an operation by using the AI model and transmits an inference result back to the first electronic device 1000. When the server-based AI model is used, the space view obtainment module 1318 and the object view obtainment module 1319 of the first electronic device 1000 may obtain a space view and an object view based on the inference result obtained from the server. With the server-based AI model, a detailed operation and block diagram of the server is described below in connection with FIG. 4.

The processor 1400 may control general operation of the first electronic device 1000. For example, the processor 1400 may control a function of the first electronic device 1000 to generate an AR view by executing the programs stored in the storage 1300.

The processor 1400 may include hardware components for performing arithmetic, logical, and input/output operations and signal processing. The processor 1400 may include at least one of e.g., central processing units (CPUs), microprocessors, graphic processing units (GPUs), application specific integrated circuits (ASIC), digital signal processors (DSPs), digital signal processing devices (DSPDs, programmable logic devices (PLDs), and field programmable gate arrays (FPGAs), or other operational circuits without being limited thereto.

In an embodiment of the disclosure, the processor 1400 may include an artificial intelligence (AI) processor for building up a learning network model without being limited thereto. In an embodiment of the disclosure, the AI processor may be implemented in a separate chip from the processor 1400. In an embodiment of the disclosure, the AI processor may be a universal chip.

The communication interface 1500 may support establishment of a wired or wireless communication channel between the first electronic device 1000 and an external electronic device or the server 3000 and communication through the established communication channel. In an embodiment of the disclosure, the communication interface 1500 may receive data from the second electronic device 2000 or the server 3000 through wired communication or wireless communication or transmit data to the second electronic device 2000, which may be for example an external electronic device, or the server 3000.

The communication interface 1500 may transmit or receive information used by the first electronic device 1000 to generate an AR view to or from the server 3000. Furthermore, the communication interface 1500 may communicate with another device or another server to generate an AR view.

**EP 4 502 959 A1**

In various embodiments of the disclosure, the communication interface 1500 may include a wireless communication module (e.g., a cellular communication module, a short-range communication module, or a global navigation satellite system (GNSS) communication module) or a wired communication module (e.g., a local area network (LAN) communication module or a power line communication module), and use one of the communication modules to communicate with the second electronic device 2000 or the server 3000 over at least one network, e.g., a short-range communication network (e.g., Bluetooth, wireless fidelity (Wi-Fi) direct, or infrared data association (IrDA)) or a long-range communication network (e.g., a cellular network, the Internet, or a computer network (e.g., a LAN or wide area network (WAN)).

FIG. 4 is a block diagram of an AI server, according to an embodiment of the disclosure.

Referring to FIG. 4, the server 3000 may include a communication interface 3100, a processor 3200, and a storage 3300.

In an embodiment of the disclosure, the processor 3200 may refer to at least one processor, which may be understood as a single component for controlling operations of the other components of the server 3000. In various embodiments of the disclosure, the server 3000 is not limited to the components shown in FIG. 4, and may include an additional component not shown in FIG. 4 or some of the components shown in FIG. 4 may be omitted. For example, the server 3000 may further include an extra processor for an AI model, e.g., at least one learning model, such as an NPU. In another example, at least a portion of a space view generation module 3310 included in the storage 3300 may be implemented in an extra hardware module instead of a software module stored in the storage 3300.

The communication interface 3100 may support establishment of a wired or wireless communication channel between the server 3000 and another external server or the first electronic device 1000 and communication through the established communication channel. In an embodiment of the disclosure, the communication interface 3100 may receive data from the other external server or the first electronic device 1000 through wired communication or wireless communication or transmit data to the other external server or the first electronic device 1000.

The communication interface 3100 may transmit or receive information used by the server 3000 to generate an AR view to or from the first electronic device 1000. Furthermore, the communication interface 3100 may communicate with the other device and the other server to generate an AR view.

In various embodiments of the disclosure, the communication interface 3100 may include a wireless communication module (e.g., a cellular communication module, a short-range communication module, or a GNSS communication module) or a wired communication module (e.g., a LAN communication module or a power line communication module), and use one of the communication modules to communicate with the external electronic device or the server 3000 over at least one network, e.g., a short-range communication network (e.g., Bluetooth, Wi-Fi direct, or IrDA) or a long-range communication network (e.g., a cellular network, the Internet, or a computer network (e.g., a LAN or WAN)).

The processor 3200 may control general operation of the server 3000. For example, the processor 3200 may control a function of the server 3000 to provide an AR view in this specification by executing the programs stored in the storage 3300.

The processor 3200 may include hardware components for performing arithmetic, logical, and input/output operations and signal processing. The processor 3200 may include at least one of e.g., CPUs, microprocessors, GPUs, ASIC, DSPs, DSPDs, PLDs, and FPGAs, or other operational circuits without being limited thereto.

In an embodiment of the disclosure, the processor 3200 may include an AI processor for building up a learning network model without being limited thereto. In an embodiment of the disclosure, the AI processor may be implemented in a separate chip from the processor 3200. In an embodiment of the disclosure, the AI processor may be a universal chip.

The storage 3300 may store a program for processing and controlling of the processor 3200. The storage 3300 may include at least one type of storage medium including a flash memory, a hard disk, a multimedia card micro type memory, a card type memory (e.g., SD or XD card memory), a RAM, an SRAM, a ROM, an EEPROM, a PROM, a magnetic memory, a magnetic disk, and an optical disk.

The programs stored in the storage 3300 may be classified into multiple modules by their functions, for example, the storage 3300 may store program code or instructions corresponding to a space view generation module 3310 and an object view generation module 3330, and may store an AR object model 3350 in a separate DB. The AR object model 3350 may be provided in advance by e.g., a manufacturer of a product that is a target of the AR object and stored in the server 3000, and when a 3D model of the AR object is included, there may be no need for extra 3D rendering to generate the AR view. Technologies used to generate an AR view may include warping and fusion, style transfer, etc.

The space view generation module 3310 may obtain a space view based on the AI model trained with an input of image frames extracted from the space image to output a space view seen from a certain position in the space. The space view generation module 3310 may include a warping unit 3311 and a fusion unit 3312 which may be used to obtain a resultant image frame by warping at least one image frame extracted from the captured space image and fusing the warped frames.

Warping may refer to purposely distorting an image or removing distortion of the image by deforming the position of a pixel, i.e., the shape of an image, and the warping unit 3311 performs a procedure of changing each of the at least one

8

image frame extracted from the input captured space image to a view seen from a certain point on the space view path. The fusion unit 3312 may remove a non-displayable area or a distorted area present in each warped image frame to generate a complete frame, i.e., a view, by combining the at least one warped image frame.

The object view generation module 3330 may include a boundary view module 3331 and an AR object transformer 3332, and may obtain an AR view based on an AI model trained with an input of an image capturing position (x, y, z) and angle (θ, φ) from a frame extracted from the space image frame to output image intensity (r, g, b).

In this case, when fully-connected layers of the AI model to predict the image intensity (r, g, b) are optimized based on the space position (x, y, z) and angle (θ, φ) extracted from the captured space image, a difference (loss) between the predicted image intensity (r, g, b) and the captured actual image intensity may be minimized. The fully-connected layer may generate any view of an arbitrary position and angle, but the result is obtained in each pixel (ray), thereby increasing an amount of operation and slowing down the processing rate.

With the method of generating an AR view according to an embodiment of the disclosure, data only at a viewpoint required to appreciate or observe the space may be processed, to reduce an amount of operation and operation speed. Furthermore, a 3D model of the AR object 1233 may be stored in the storage 3300 in a DB format, so extra 3D modeling of the AR object may be not required, and an actual background area instead of the whole area and a boundary area of the AR object may be synthesized, for example using boundary view module 3331, to prevent distortion at a boundary between the AR object and the background and minimize an area to be image-synthesized.

The object view generation module 3330 may obtain an object view based on the AI model trained to transform the style of the AR object based on a style feature of the space.

In an embodiment of the disclosure, when the AR object is synthesized into the background image, the AR object may be transformed, for example using the AR object transformer 3332, based on a circumstance or feature of the background in order to better integrate the AR object with the background.

In an embodiment of the disclosure, by replacing the style feature among the style feature and the content feature extracted from the AR object with a style feature extracted from the captured space image, the AR object may be transformed into a style similar to one captured in the real space. In this case, the style transfer may be performed based on the AI model trained by using a style transfer network.

A specific method of generating a space view and an AR view is described below in connection with FIGS. 7A to 8B.

Each module included in the server 3000 may use an external application programming interface (API) to obtain a result of an external server or a third party when the result of the external server or the third party is required, and generate an output of the server 3000 based on the obtained result of the external server or the third party.

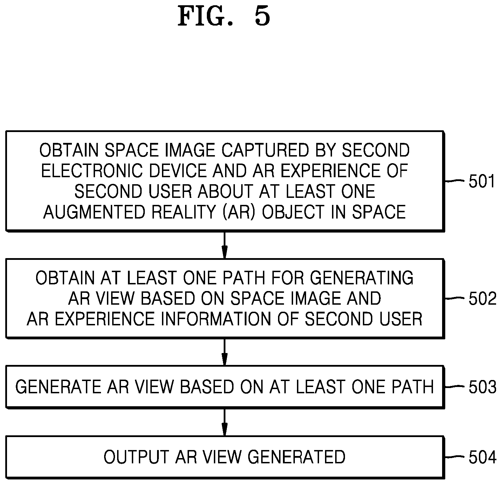

FIG. 5 is a sequence chart of a method, performed by a first electronic device, of providing an AR view, according to an embodiment of the disclosure.

Referring to FIG. 5, the second user 2001 may refer to a direct user who obtains an AR experience in a real space, and the first user 1001 may refer to an indirect user who obtains an extended AR experience based on the AR experience of the second user. Furthermore, the second electronic device 2000 may refer to an electronic device that captures a space image from which the second user obtains the AR experience, and the first electronic device 1000 may refer to an electronic device that generates and provides an AR view based on the space image and the AR experience of the second user shared from the second electronic device.

In operation S501, the first electronic device 1000 may obtain the space image captured by the second electronic device, and AR experience information of the second user of at least one AR object in the space.

The second user 2001 may use the second electronic device 2000 to capture a real space in video. The second user 2001 may obtain an AR experience by placing a selected AR object in a desired position and direction on the space image while capturing the real space 4000 in video with the second electronic device 2000.

The first electronic device 1000 may obtain the space image captured by the second electronic device 2000 and the AR experience of the second user 2001 to generate an AR view for an indirect AR experience of the first user 1001.

In operation S502, the first electronic device 1000 may obtain at least one path for generating the AR view based on the space image and the AR experience information of the second user.

The at least one path for generating the AR view may include a first path, for example a space view path 1316, for generating a space view to appreciate or observe the space, and a second path for example an object view path 1317, for generating an object view to appreciate or observe an AR object.

A method of generating an AR view according to an embodiment of the disclosure may include modeling a space based on information about the space image and the AR object, obtaining the first path based on the modeled space and the space image, and obtaining the second path based on information about the first path and the AR object.

A specific method of obtaining the first path and the second path is described below in connection with FIGS. 6A to 6D.

In operation S503, the first electronic device 1000 may generate an AR view based on at least one path for generating the AR view.

In a method of generating an AR view according to an embodiment of the disclosure, an image may be not generated for each pixel (ray), and a space view may be generated by performing warping and fusion on the existing space image frame. In an embodiment of the disclosure, a space view (or target view) seen from a viewpoint on the first path in an AR space plane may be obtained based on at least one frame selected from the captured space image.

A method of generating an AR view according to an embodiment of the disclosure may include generating a space view corresponding to the first path based on the space image and the first path, generating an object view corresponding to the second path based on the object model and the second path, and synthesizing the space view and the object view to generate an AR view.

A method of generating the space view and the object view is described in detail below in connection with FIGS. 7A to 8B.

In operation S504, the first electronic device 1000 may output the generated AR view.

A method of generating the AR view according to an embodiment of the disclosure may include displaying the AR view on the display 1230 of the first electronic device 1000.

As discussed above, in an embodiment of the disclosure, a display 1230 of the first electronic device 1000 may include an area 1231 for displaying the AR view, an area 1234 for displaying replaceable AR objects, and an area 1235 for displaying a recommended AR object, and in the area 1231 for displaying the AR view, an AR object may be overlaid and displayed onto a space model 1232 generated based on the space captured by the second electronic device 2000.

As discussed above, in an embodiment of the disclosure, the AR object overlaid on the space model 1232 generated based on the space captured by the second electronic device 2000 may be the same AR object 1233 as the AR object placed by the second user, an AR object selected based on the AR experience of the second user, or an AR object selected based on a result of analyzing the space.

FIGS. 6A to 6D are diagrams for describing a method of determining a path for an AR experience in a space model including an AR object, according to an embodiment of the disclosure.

The space model 710 may include real objects 1232-1 and 1232-2, an AR object 1233 and an AR space plane 720.

The space model including the AR object may refer to a space model that reflects the AR object not present in the real space. When the AR object is placed in the real space, there is no real object present in the position in which to place the AR object, so the second user might move into the space in which to place the AR object while capturing the space. However, in consideration of AR object placement, the space needs to have the AR object, so the second user is prevented from moving into the space. In this case, an image capturing path of the second user may be changed based on the position of the AR object.

Referring to FIG. 6A, in an embodiment of the disclosure, the first electronic device 1000 may identify whether there is crossing points 734 and 735 between an image capturing path 730, denoted as Path$_{USER}$, of the second user and an AR space plane 720 based on the space image captured by the second user. The first electronic device 1000 may determine a certain reference point 732, denoted as P$_{base}$ within the image capturing path 730 of the second user. For example, a midpoint between a start point 731 and an end point 733 of the image capturing path 730 of the second user may be determined to be the reference point 732.

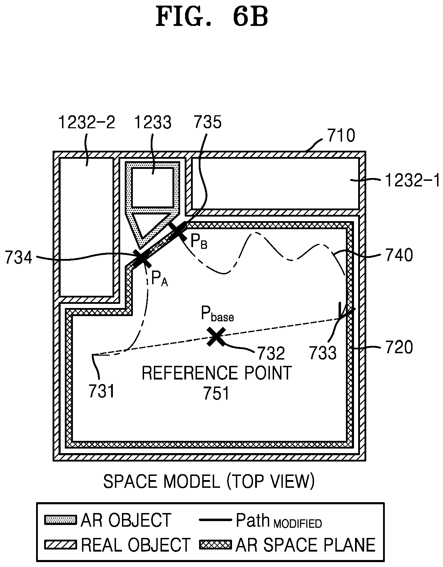

Referring to FIG. 6B, in an embodiment of the disclosure, the first electronic device 1000 may obtain a modified image capturing path 740 based on the identified crossing points. For example, in a situation in which there are two crossing points, for example crossing point 734, denoted as point P$_A$, and crossing point 735, denoted as point Ps, between the image capturing path 730 of the second user and the AR space plane 720, a set r of points on the modified image capturing path 740 depending on distances between the image capturing path 730 of the second user, the AR space plane 720 and the reference point 732 in the section of the crossing points 734 and 735 may be determined according to Equation 1

$$[\text{Equation 1}]$$

$$\text{if } P_A < p1 < P_B$$

$$r = D(p1,\ P_{base}) < D(q,\ P_{base})\ ?\ p1 : q$$

$$\text{else}$$

$$r = p1$$

In Equation 1 above, q may denote a point in the AR space plane on (reference point, p1), p1 may denote a set of points on the image capturing path 730 of the second user, and r may denote a set of points on the modified image capturing path 740. In embodiments, p1 and r may be determined based on Equation 2 and Equation 3, respectively:

[Equation 2]

$$p1 \in Path_{user} = \{P_{start}, \ldots, P_A, \ldots, P_B, \ldots, P_{end}\}$$

[Equation 3]

$$r \in Path_{modified}$$

Furthermore, $D(x, y)$ may denote a Euclidean distance from y to x, and Equation 1 indicates that each point p1 in the section $[P_A, P_B]$ on the image capturing path 730 of the second user may be mapped to a point on the straight line $[P_A, P_B]$ one on one.

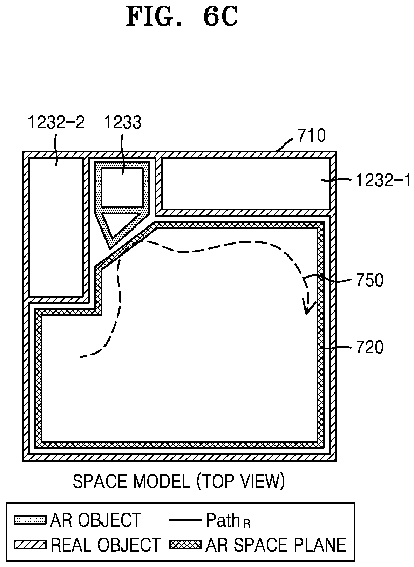

Referring to FIG. 6C, in an embodiment of the disclosure, the first electronic device 1000 may further modify the modified image capturing path 740 to determine a space view path 750, denoted as path $Path_R$, which may be suitable to appreciate or observe the modeled space. When the space image capturer, e.g., the user 2001 of the second electronic device 2000, is unaccustomed to image capturing, the captured space image may have unintentional blurring or quality deterioration along a moving path of the space image capturer. In this case, an image processing technique such as a smoothing technique may be applied to stably modify the image capturing path, allowing the space image to be observed in the modified path, thereby obtaining more stable space image.

In an embodiment of the disclosure, the first electronic device 1000 may obtain the space view path 750 by smoothing the modified image capturing path 740 based on the image capturing path 730 of the user of the second electronic device or the space model. For example, mean filter smoothing, L0 filter smoothing, etc., may be used to perform filter-based path smoothing faster.

When there are no crossing points 734 and 735 between the image capturing path 730 of the second user and the AR space plane 720, the first electronic device 1000 may obtain the space view path 750 by performing path smoothing on the image capturing path 730 of the user of the second electronic device. On the other hand, when there are crossing points 734 and 735 between the image capturing path 730 of the second user and the AR space plane 720, the first electronic device 1000 may obtain the space view path 750 by performing path smoothing on the modified image capturing path 740 based on the space model.

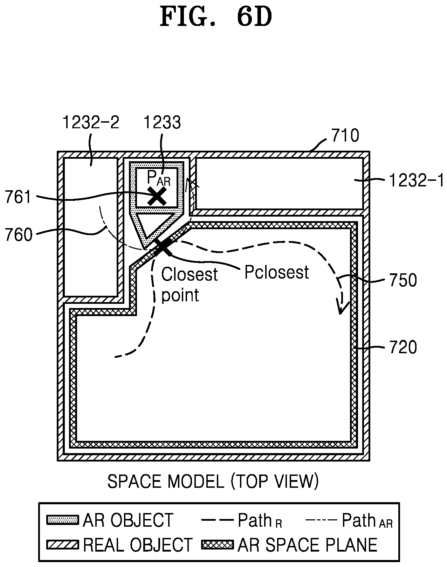

Referring to FIG. 6D, in an embodiment of the disclosure, the first electronic device 1000 may determine an object view path 760, denoted as $Path_{AR}$, which may be suitable to appreciate or observe the AR object, based on the AR object 1233 and the space view path 750. For example, a center of the AR object 1233 may be determined as a reference point 761, denoted as $P_{AR}$, and a closest point 761 to the center 761 of the AR object 1233 may be determined among points p2 on the space view path 750. In embodiments, the closest point 761 may be denoted as $P_{closest}$, and may be determined according to Equation 4 below:

[Equation 4]

$$P_{closest} = argmin(D(p2, P_{AR}))$$

In Equation 4 above, p2 may be defined as a set of points on the space view path 750 as shown in Equation 5 below:

[Equation 5]

$$p2 \in Path_R$$

In this case, the object view path 760 may be determined to be a circle that is centered on $P_{AR}$ and passes through $P_{closest}$.

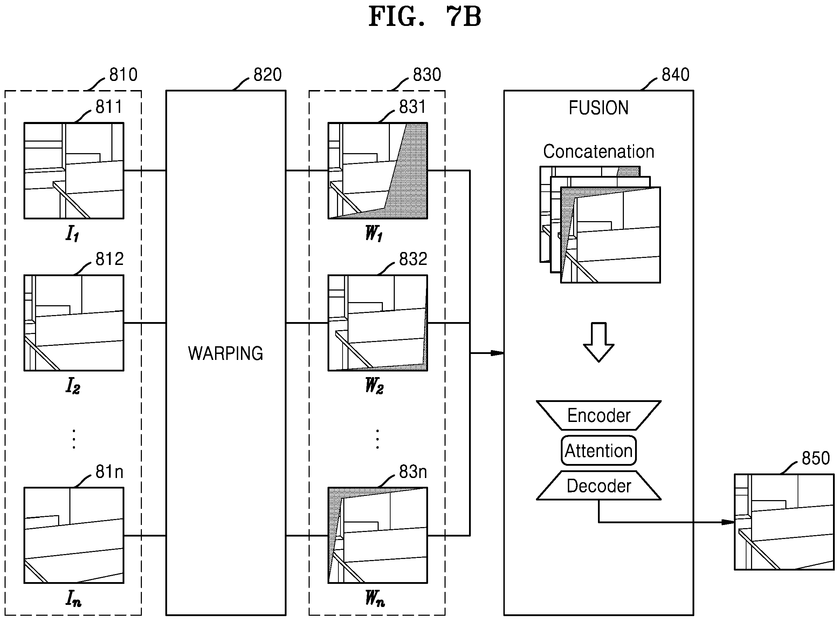

FIGS. 7A and 7B are diagrams for describing a method of generating a space view, according to an embodiment of the disclosure.

In a method of generating an AR view according to an embodiment of the disclosure, an image may be not generated for each pixel (ray), and a space view may be generated by performing warping and fusion on the existing space image.

Referring to FIG. 7A, in an embodiment of the disclosure, a space view (or target view) seen from a viewpoint 751 on the space view path 750 in the AR space plane 720 may be obtained based on at least one frame selected from the captured space image.

In an embodiment of the disclosure, the space view (or target view) seen from the viewpoint 751 on the space view path 750 may be obtained based on an AI model trained with inputs of frames I1, I2 and I3 of the captured space image at one or more points, e.g., point 736, point 737 and point 738, at which lines drawn from the viewpoint 751 meet on the image capturing path 730 of the second user to output the space view (or target view) seen from the viewpoint 751.

Referring to FIG. 7B, the first electronic device 1000 for generating a space view according to an embodiment of the disclosure may include a warping unit 820 and a fusion unit 840 to obtain a resultant image frame 850 by warping (for example using warping unit 820) at least one image frame 811 to 81n extracted from the captured space image and fusing (for example using fusion unit 840) warped frames 831 to 83n.

Warping is a technology of purposely distorting an image or removing distortion of the image by deforming the position of a pixel, i.e., the shape of an image, and the warping unit 820 performs a procedure of changing each of the at least one image frame extracted from an input captured space image into a view seen from a viewpoint 851 in the space view path 750.

In the example shown in FIGS. 7A and 7B, based on n=3, I1 may be an image frame captured at point 736 on the image capturing path of the user, I2 may be an image frame captured at point 737 on the image capturing path of the user, and I3 may be an image frame captured at point 738 on the image capturing path of the user. In embodiments, the warping may correspond a pre-processing operation of converting I1, I2 and I3 into a fusionable state, because I1, I2 and I3 are captured at different positions and may not be fused in their original form.

In an embodiment of the disclosure, warping may be performed based on an AI model trained with a spatial transformer network (STN). The STN may output a matrix M that transforms translation, scaling and rotation based on input features. With the STN, end-to-end learning is possible, so warping learning that is suitable for synthesis is possible. In this case, the AI model may be trained by configuring a DB with at least one input image frame and one target output image frame and designating a loss function as L1 norm between a target image and a resultant image.

In an embodiment of the disclosure, warping unit 820 may obtain a transform matrix H based on an angular change (difference) between viewpoints at which I1, I2 and I3 are captured, and intrinsic coefficients. In this case, the transform matrix H may be a homography matrix.

Warped image frames W1, W2 and W3 result from transforming I1, I2 and I3 to images seen from the viewpoint 751, respectively. However, the warped image frames W1, W2 and W3 may have a non-displayable area or a distorted area.

The fusion unit 840 may remove the non-displayable area or the distorted area present in each warped image frame to generate a complete frame, i.e., the view 850, by combining the at least one warped image frame.

In an embodiment of the disclosure, the fusion unit 840 may concatenate warped images with weights applied thereto, encode them, highlight a portion of the input features that needs to have a higher weight in the space domain, and then decode them. For example, the feature extracted from the image frame W1 is trained to highlight feature values located in a required area (or attention area) in the resultant image.

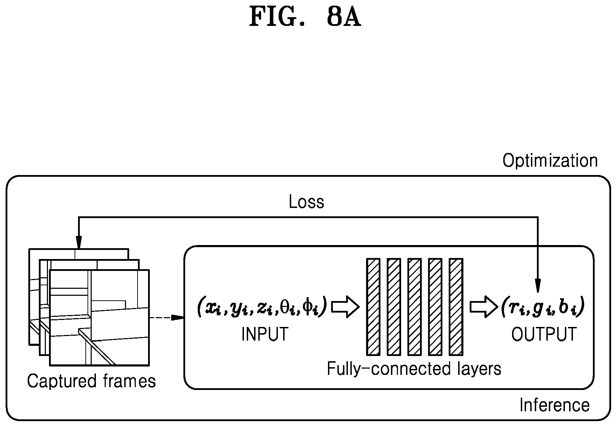

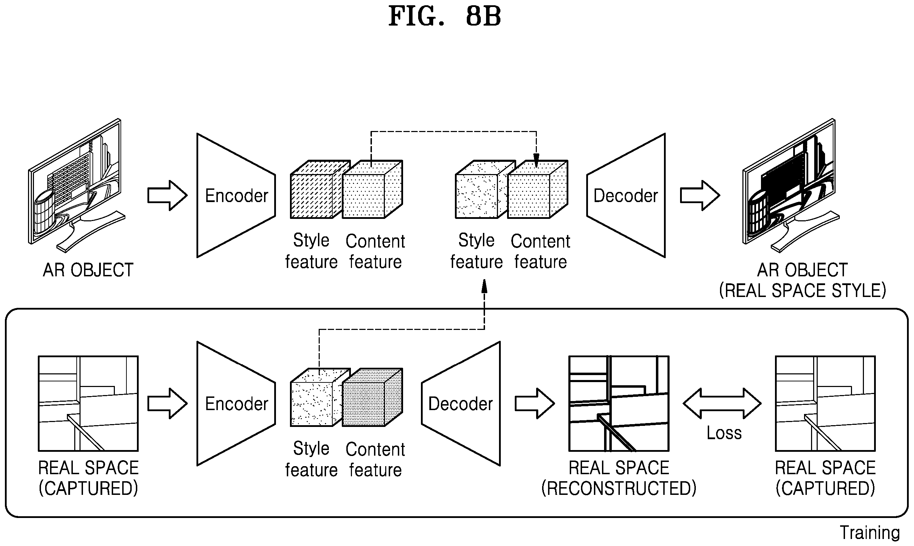

FIGS. 8A and 8B are diagrams for describing a method of generating an object view, according to an embodiment of the disclosure.

In an embodiment of the disclosure, an object view may refer to an AR view of an object seen from the object view path 760 in the AR space plane 720, in which case the AR view of the object may be a 360-degree view.

Referring to FIG. 8A, in an embodiment of the disclosure, the object view may be obtained by training an AI model that has inputs of a 3D image capturing position $(x, y, z)$ of a captured image and captured angle $(\theta, \varphi)$ to infer $(r, g, b)$ of the image.

A predefined operation rule or AI model being made by learning may refer to the predefined operation rule or the AI model established to perform a desired feature (or an object) being made when a basic AI model is trained by a learning algorithm with a lot of training data. The AI model may include a plurality of neural network layers. Each of the plurality of neural network layers may have a plurality of weight values, and perform neural network operation through operation between an operation result of the previous layer and the plurality of weight values.

Inferential prediction may be a technique for determining information and making a logical inference and prediction from the determination, and may include knowledge/probability based reasoning, optimization prediction, preference-based planning, recommendations, etc.

In this case, when fully-connected layers of the AI model to predict the image intensity $(r, g, b)$ are optimized based on the space position $(x, y, z)$ and angle $(\theta, \varphi)$ extracted from the captured space image, a difference (loss) between the predicted image intensity (r, g, b) and the captured actual image intensity may be minimized. The fully-connected layer may generate any view of an arbitrary position and angle, but the result is obtained in each pixel (ray), thereby increasing an amount of operation and slowing down the processing rate.

With the method of generating an AR view according to an embodiment of the disclosure, data only at a viewpoint required to appreciate or observe the space may be processed by synthesizing images at viewpoints on the space view path 750 of the captured space image, thereby reducing an amount of operation and operation speed. Furthermore, a 3D model of the AR object 1233 may be stored in advance in the storage 1300 of the first electronic device 1000, in which case there is no need for extra 3D modeling of the AR object.

A method of generating an AR view according to an embodiment of the disclosure may include extracting a spatial position (x, y, z) and a capturing angle ($\theta$, $\varphi$) from the captured image, and generating a view of a boundary region between an actual background area and the AR object instead of the whole area, thereby preventing distortion on the boundary between the AR object and the background and minimizing an area with which to perform image synthesis.

Referring to FIG. 8B, an AR view according to an embodiment of the disclosure may be generated based on style transfer.

In an embodiment of the disclosure, when the AR object is synthesized into the background image, the AR object may be transformed based on a circumstance or feature of the background to make the AR object naturally fit into the background.

In an embodiment of the disclosure, by replacing the style feature among the style feature and the content feature extracted from the AR object with a style feature extracted from the captured space image, the AR object may be transformed into a style similar to one captured in the real space. In this case, the style transfer may be performed based on the AI model trained with an STN.

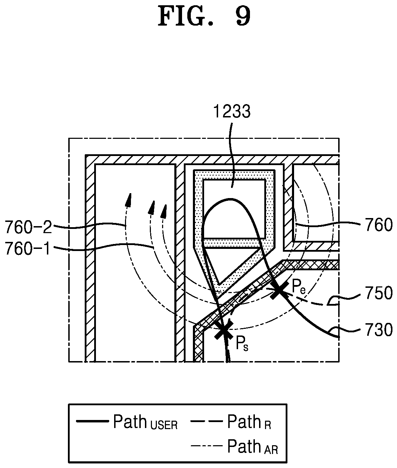

FIG. 9 illustrates a method of generating an AR view, according to an embodiment of the disclosure.

Quality of the synthesized view may deteriorate in the area in which there is a significant path change from the captured image capturing path 730 to the space view path 750 due to the AR object, and when there is a difference in synthesized view in an area where two different paths are adjacent, the user may have a poor AR experience quality. To solve this problem, a method of generating an AR view according to an embodiment of the disclosure may include a view integration process for smooth transfer from the space view path750 to the object view path 760.

Referring to FIG. 9, the view synthesis may be performed at contact points 751 and 752, denoted as Pe and Ps, between the image capturing path 730 and the space view path 750.

For example, based on a set of points between {Ps, ..., Pe} on the space view path 750 being p3 $\in$ {Ps,..., Pe}, a view at p3, viewp3, may be determined according to Equation 6 below:

[Equation 6]

$$\text{viewp3} = \text{Alpha\_blending}(view_{R,p3}, view_{AR,p3})$$

where $view_{R,p3}$ may refer to a view at point p3 on the space view path 750, and $view_{AR,p3}$ may refer to a view at point p3 joining the space view path 750 by modifying the radius of the object view path 760. Views may be integrated by blending $view_{R,p3}$ and $view_{AR,p3}$ in the section [Pe, Ps] on the space view path 750.

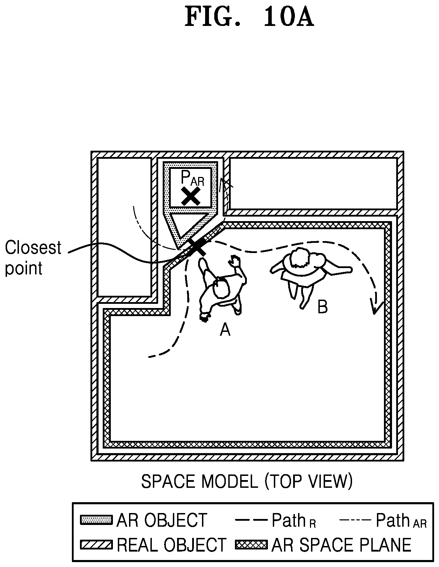

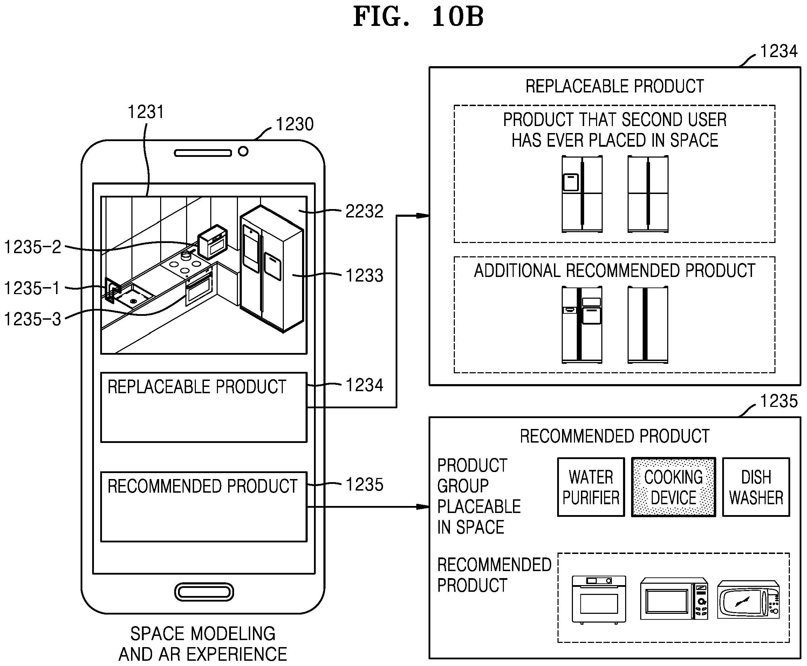

FIGS. 10A and 10B are a diagrams for describing a method of recommending an object in a method of providing an AR view, according to an embodiment of the disclosure.

A method of providing an AR view according to an embodiment of the disclosure may include recommending an AR object to allow the indirect user, for example the first user 1001, to have an active AR experience based on data obtained by proceeding space modeling and AR experience data of a direct user in the space, for example the second user 2001.

Referring to FIG. 10A, the method of providing an AR view according to an embodiment of the disclosure may include providing an additional AR object recommendation at point A, which may be a position at which the second user 2001 places the AR object, or at point B, which may be a position at which the second user 2001 does not place the AR object but at which the AR object has ever been placed, for example previously by the second user 2001, or by other users.

The method of providing an AR view according to an embodiment of the disclosure may include recommending a product of a type (e.g., a sound bar) that corresponds to or is associated with the type of the AR object (e.g., a television) placed by the second user at point A where the second user 2001 places the AR object, recommending a product in the same category as the AR object that the second user 2001 places at point A where the second user 2001 places the AR object, or recommending a product that the second user 2001 has ever viewed or considered, but did not actually place in the position.

The method of providing an AR view according to an embodiment of the disclosure may include recommending a product that may be additionally placed in the space at point B where the second user 2001 does not place the AR object but the AR object has ever been placed, recommending a replaceable product for a product in the space, or recommending a product that the second user 2001 has ever viewed or considered, but never actually placed in the position.

Referring to FIG. 10B, a display area 1230 of the first electronic device 1000 for providing an AR view according to an embodiment of the disclosure may include an area 1231 for displaying the AR view, an area 1234 for displaying a replaceable product, and an area 1235 for displaying a recommended product.

In an embodiment of the disclosure, in the area 1234 for displaying the replaceable product, a product that the second user has ever placed in the position of the space, a product that the second user has ever considered placing the product but never actually placed, or a product in the same category as the AR object placed by the second user as a replaceable product may be displayed.

In an embodiment of the disclosure, in the area 1235 for displaying the recommended product, spaces 1235-1 to 1235-3 in which an additional AR object may be placed and corresponding products belonging to a product group (e.g., a water purifier, a cooking device, and a dish washer) may be displayed as recommended products.

In an embodiment of the disclosure, in the area 1235 for displaying the recommended product, a product of a type (e.g., a sound bar) that goes with the type of the AR object (e.g., a television) that the second user places, or a product that the second user has viewed or considered, but actually never placed in a certain position in the space, may be displayed as a recommended product.

In an embodiment of the disclosure, the generated AR view may be provided in a video format encoded by a standard codec, in which case the generated AR view may be shared with another user without operating system (OS) or execution environment (e.g., whether an application for generating and/or providing an AR view is installed) constraints. In this case, a highlight of an AR experience of the user in the space may be included in the AR view video, and the replaceable product or the recommended product may be provided in such a format as picture-in-picture (PIP) in the video.

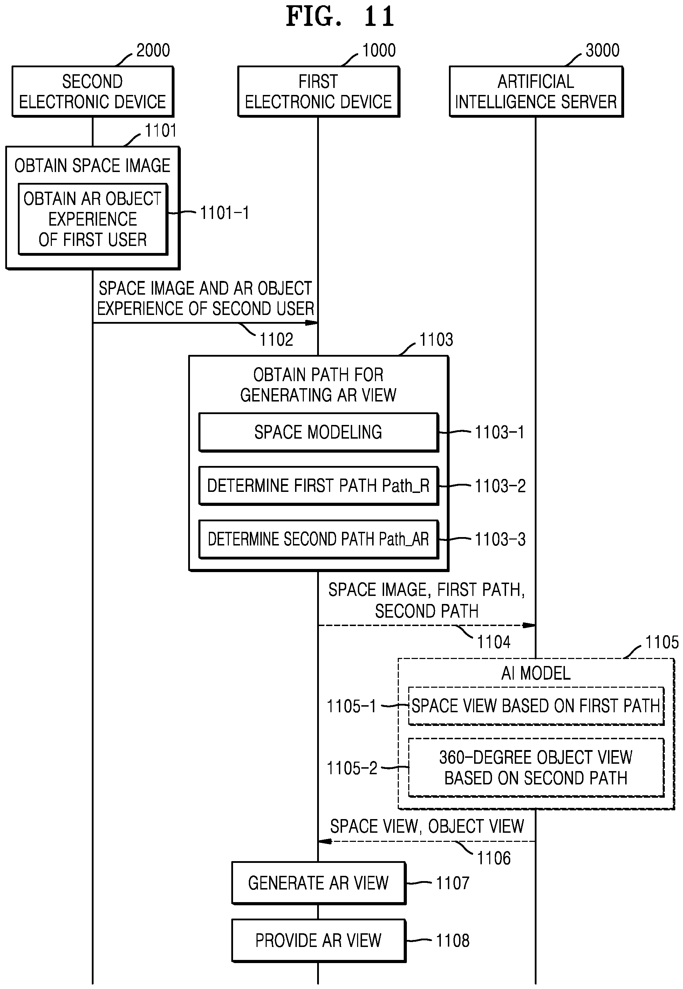

FIG. 11 is a flowchart of a method of generating an AR view by using an AI server in an AR view generation system, according to an embodiment of the disclosure.

Referring to FIG. 11, in an embodiment of the disclosure, an AR view generation system may include the first electronic device 1000, the second electronic device 2000, and the AI server 3000. In respective operations of FIG. 11, descriptions overlapping or redundant with those in FIGS. 5 to 9B may be stated briefly or omitted.

In operation S1101, the second electronic device 2000 may obtain an AR experience of the second user, while capturing a space image of a space for AR experience, in operation S1101-1. The second user 2001 may refer to a direct user who obtains an AR experience in a real space, and the second electronic device 2000 may refer to an electronic device for capturing the space image in which the user obtains the AR experience.

In operation S1102, the second electronic device 2000 may transmit the captured space image and the AR experience of the second user to the first electronic device 1000.

In operation S1103, the first electronic device 1000 may obtain at least one path for generating an AR view based on the space image obtained and the AR experience information of the second user.

For example, the first electronic device 1000 may model the space based on the space image in operation S1103-1, obtain a first path (which may be referred to as a space view path) for generating a space view to appreciate or observe the space in the modeled space in operation S1103-2, and obtain a second path (which may be referred to as an object view path) for generating an object view to appreciate or observe an AR object in operation S1103-3.

A method of generating an AR view according to an embodiment of the disclosure may include modeling a space based on information about the space image and the AR object, obtaining the first path based on the modeled space and the space image, and obtaining the second path based on information about the first path and the AR object.

In operation S1104, the first electronic device 1000 may transmit the space image, the first path and the second path to the AI server.

In operation S1105, based on the space image, the first path and the second path, the AI server 3000 may generate a space view based on the first path in operation S1105-1 and generate an object view based on the second path in operation S1105-2.

In a method of generating an AR view according to an embodiment of the disclosure, an image may be not generated for each pixel (ray), and a space view is generated by performing warping and fusion on the existing space image frames. In an embodiment of the disclosure, a space view (or target view) seen from a viewpoint on the first path in an AR space plane may be obtained based on at least one frame selected from the captured space image.

In an embodiment of the disclosure, the space view and the object view may be obtained by using an AI model built up by learning.

A predefined operation rule or AI model being made by learning may refer to the predefined operation rule or the AI model established to perform a desired feature (or an object) being made when a basic AI model is trained by a learning algorithm with a lot of training data. The AI model may include a plurality of neural network layers. Each of the plurality of neural network layers may have a plurality of weight values, and perform neural network operation through operation between an operation result of the previous layer and the plurality of weight values.

Inferential prediction may be a technique for determining information and making a logical inference and prediction from the determination, and includes knowledge/probability based reasoning, optimization prediction, preference-based planning, recommendations, etc.

In operation S1106, the AI server 3000 may transmit the space view and object view generated to the first electronic device 1000.

In operations S1107 and S1108, the first electronic device 1000 may generate an AR view by synthesizing the space view and the object view obtained, and display or otherwise provide the AR view generated on the display 1230.

Several embodiments have been described, but a person of ordinary skill in the art will understand and appreciate that various modifications can be made without departing the scope of the disclosure. Thus, it will be apparent to those of ordinary skill in the art that the disclosure is not limited to the embodiments described, but can encompass not only the appended claims but the equivalents. For example, an element described in the singular form may be implemented as being distributed, and elements described in a distributed form may be implemented as being combined.

The machine-readable storage medium may be provided in the form of a non-transitory storage medium. The term non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store, directly between two user devices (e.g., smart phones), or online (e.g., downloaded or uploaded). In the case of online distribution, at least part of the computer program product (e.g., a downloadable app) may be at least temporarily stored or arbitrarily generated in a storage medium that may be readable to a device such as a server of the manufacturer, a server of the application store, or a relay server.

## Claims

1. A method, performed by a first electronic device (1000), of generating an augmented reality (AR) view for a first user, the method comprising:

   obtaining an image of a space captured by a second electronic device (2000) and AR experience information about at least one AR object in the space, wherein the AR experience information corresponds to a second user;
   obtaining at least one path (750 or 760) for generating an AR view based on the image of the space and the AR experience information;
   generating the AR view (1231) based on the at least one path; and
   outputting the AR view.

2. The method of claim 1, wherein the obtaining of the at least one path comprises:

   modeling (720) the space based on information about the at least one AR object and the image of the space;
   obtaining a first path (750) corresponding to a space view based on the modeled space and the image of the space; and
   obtaining a second path (760) corresponding to an object view based on the information about the at least one AR object and the first path.

3. The method of claim 2, wherein the generating of the AR view comprises:

   obtaining the space view based on the image of the space and the first path;
   obtaining the object view based on an object model for the at least one AR object and the second path; and
   synthesizing the space view and the object view.

4. The method of claim 3, wherein the obtaining of the space view comprises:

   warping at least one frame extracted from the image of the space; and
   fusing the warped at least one frame.

**5.** The method of claim 3, wherein the obtaining of the object view comprises:

extracting a style feature of the space; and
transforming a style of the at least one AR object based on the style feature of the space.

**6.** The method of claim 1, further comprising recommending a placeable AR object based on at least one of the AR experience information and a result of analyzing the space.

**7.** A first electronic device for generating an augmented reality (AR) view for a first user, the first electronic device comprising:

a display;
a communication module;
a storage configured to store a program including at least one instruction; and
at least one processor configured to execute the at least one instruction stored in the storage to:

obtain an image of a space captured by a second electronic device through the communication module and AR experience information about at least one AR object in the space, wherein the AR experience information corresponds to a second user,
obtain at least one path for generating an AR view based on the image of the space and the AR experience information of the second user,
generate the AR view based on the at least one path, and
output the AR view on the display.

**8.** The first electronic device of claim 7, wherein the at least one processor is further configured to execute the at least one instruction to:

model the space based on information about the at least one AR object and the image of the space,
obtain a first path corresponding to a space view based on the modeled space and the image of the space, and
obtain a second path corresponding to an object view based on the information about the at least one AR object and the first path.

**9.** The first electronic device of claim 8, wherein the at least one processor is further configured to execute the at least one instruction to:

obtain the space view based on the image of the space and the first path,
obtain the object view based on an object model for the at least one AR object and the second path, and
generate the AR view by synthesizing the space view and the object view.

**10.** The first electronic device of claim 9, wherein the at least one processor is further configured to execute the at least one instruction to:

obtain the space view by warping at least one frame extracted from the image of the space, and
fuse the warped at least one frame.

**11.** The first electronic device of claim 9, wherein the at least one processor is further configured to execute the at least one instruction to:

obtain the object view by extracting a style feature of the space, and
transform a style of the at least one AR object based on the style feature of the space.

**12.** The first electronic device of claim 7, wherein the at least one processor is further configured to execute the at least one instruction to recommend a placeable AR object based on at least one of the AR experience information and a result of analyzing the space.

**13.** A non-transitory computer-readable recording medium having recorded thereon a program for performing the method of any of claims 1 to 6, on a computer.

# FIG. 1

# FIG. 2A

SPACE IMAGE CAPTURING

SECOND USER

PLACEABLE PRODUCT

AR EXPERIENCE

EP 4 502 959 A1

# FIG. 2B

FIRST USER

SPACE MODELING
AND AR EXPERIENCE

REPLACEABLE PRODUCT

# FIG. 3

FIRST ELECTRONIC DEVICE 1000

INPUT MODULE 1100

CAMERA 1110

MICROPHONE 1130

OUTPUT MODULE 1200

SPEAKER 1210

DISPLAY 1230

STORAGE 1300

AR VIEW GENERATION MODULE 1310

SPACE MODELING MODULE 1311

VIEW SYNTHESIS MODULE 1315

SPACE VIEW OBTAINMENT MODULE 1318

PATH GENERATION MODULE 1313

SPACE VIEW PATH 1316

OBJECT VIEW PATH 1317

OBJECT VIEW OBTAINMENT MODULE 1319

AR MODEL 1330

PROCESSOR 1400

COMMUNICATION INTERFACE 1500

# FIG. 4

SERVER 3000

COMMUNICATION INTERFACE — 3100

PROCESSOR — 3200

STORAGE GENERATION — 3300

SPACE VIEW GENERATION MODULE — 3310

WARPING — 3311

FUSION — 3312

OBJECT VIEW GENERATION MODULE — 3330

BOUNDARY VIEW — 3331

AR OBJECT TRANSFORMER — 3332

AR MODEL — 3350

# FIG. 5

```
┌─────────────────────────────────────────────┐
│   OBTAIN SPACE IMAGE CAPTURED BY SECOND      │
│   ELECTRONIC DEVICE AND AR EXPERIENCE OF     │── 501
│       SECOND USER ABOUT AT LEAST ONE         │
│     AUGMENTED REALITY (AR) OBJECT IN SPACE   │
└─────────────────────────────────────────────┘
                      │
                      ▼
┌─────────────────────────────────────────────┐
│    OBTAIN AT LEAST ONE PATH FOR GENERATING   │
│      AR VIEW BASED ON SPACE IMAGE AND        │── 502
│   AR EXPERIENCE INFORMATION OF SECOND USER   │
└─────────────────────────────────────────────┘
                      │
                      ▼
┌─────────────────────────────────────────────┐
│  GENERATE AR VIEW BASED ON AT LEAST ONE PATH │── 503
└─────────────────────────────────────────────┘
                      │
                      ▼
┌─────────────────────────────────────────────┐
│          OUTPUT AR VIEW GENERATED            │── 504
└─────────────────────────────────────────────┘
```

# FIG. 6A

SPACE MODEL (TOP VIEW)

| | |
|---|---|
| AR OBJECT | Path USER |
| REAL OBJECT | AR SPACE PLANE |

# FIG. 6B

1232-2  1233  735  710
1232-1
734
$P_B$
740
$P_A$
$P_{base}$
732  733  720
REFERENCE POINT
731  751

SPACE MODEL (TOP VIEW)

AR OBJECT —— Path MODIFIED
REAL OBJECT  AR SPACE PLANE

# FIG. 6C

1232-2  1233  710

1232-1

750

720

SPACE MODEL (TOP VIEW)

AR OBJECT    Path R
REAL OBJECT    AR SPACE PLANE

# FIG. 6D

SPACE MODEL (TOP VIEW)

| AR OBJECT | ——Path$_R$ | ----Path$_{AR}$ |
| REAL OBJECT | AR SPACE PLANE | |

# FIG. 7A

# FIG. 7B

EP 4 502 959 A1

# FIG. 8A

Optimization

Loss

$(x_i, y_i, z_i, \theta_i, \phi_i) \Rightarrow$ INPUT

$\Rightarrow (r_i, g_i, b_i)$ OUTPUT

Fully-connected layers

Captured frames

Inference

# FIG. 8B

AR OBJECT

Encoder

Style feature  Content feature

Style feature  Content feature

Decoder

AR OBJECT
(REAL SPACE STYLE)

REAL SPACE
(CAPTURED)

Encoder

Style feature  Content feature

Decoder

REAL SPACE
(RECONSTRUCTED)

Loss

REAL SPACE
(CAPTURED)

Training

EP 4 502 959 A1

# FIG. 9

# FIG. 10A

Closest point

SPACE MODEL (TOP VIEW)

AR OBJECT  — — Path$_R$  ----Path$_{AR}$
REAL OBJECT  AR SPACE PLANE

# FIG. 10B

SPACE MODELING
AND AR EXPERIENCE

1234

REPLACEABLE PRODUCT

PRODUCT THAT SECOND USER
HAS EVER PLACED IN SPACE

ADDITIONAL RECOMMENDED PRODUCT

1235

RECOMMENDED PRODUCT

PRODUCT
GROUP
PLACEABLE
IN SPACE

| WATER PURIFIER | COOKING DEVICE | DISH WASHER |

RECOMMENDED
PRODUCT

EP 4 502 959 A1

# FIG. 11

```
      ⟋2000                    ⟋1000                      ⟋3000
┌──────────────┐      ┌──────────────┐      ┌──────────────────┐
│    SECOND    │      │    FIRST     │      │   ARTIFICIAL     │
│  ELECTRONIC  │      │  ELECTRONIC  │      │   INTELLIGENCE   │
│    DEVICE    │      │    DEVICE    │      │      SERVER      │
└──────────────┘      └──────────────┘      └──────────────────┘
```

┌─────────────────────────┐ ⟋1101
│ OBTAIN SPACE IMAGE       │
│ ┌─────────────────────┐ │
│ │ OBTAIN AR OBJECT    │ │ ⟋1101-1
│ │ EXPERIENCE          │ │
│ │ OF FIRST USER       │ │
│ └─────────────────────┘ │
└─────────────────────────┘

SPACE IMAGE AND AR OBJECT
EXPERIENCE OF SECOND USER
⟍1102

⟋1103
┌──────────────────────────────────────┐
│ OBTAIN PATH FOR                       │
│ GENERATING AR VIEW                    │
│ ┌──────────────────────────────────┐ │
│ │ SPACE MODELING                   │ │— 1103-1
│ └──────────────────────────────────┘ │
│ ┌──────────────────────────────────┐ │
│ │ DETERMINE FIRST PATH Path_R      │ │— 1103-2
│ └──────────────────────────────────┘ │
│ ┌──────────────────────────────────┐ │
│ │ DETERMINE SECOND PATH Path_AR    │ │— 1103-3
│ └──────────────────────────────────┘ │
└──────────────────────────────────────┘

SPACE IMAGE, FIRST PATH,
SECOND PATH
⟍1104

⟋1105
┌──────────────────────────────────────────┐
│ AI MODEL                                 │
│ ┌──────────────────────────────────────┐ │
│1105-1 —│ SPACE VIEW BASED ON FIRST PATH │ │
│ └──────────────────────────────────────┘ │
│ ┌──────────────────────────────────────┐ │
│1105-2 —│ 360-DEGREE OBJECT VIEW         │ │
│        │ BASED ON SECOND PATH           │ │
│ └──────────────────────────────────────┘ │
└──────────────────────────────────────────┘

SPACE VIEW, OBJECT VIEW
⟍1106

┌──────────────────────┐
│ GENERATE AR VIEW     │— 1107
└──────────────────────┘

┌──────────────────────┐
│ PROVIDE AR VIEW      │— 1108
└──────────────────────┘

## INTERNATIONAL SEARCH REPORT

| International application No. |
| --- |
| **PCT/KR2023/006699** |

### A. CLASSIFICATION OF SUBJECT MATTER

**G06T 19/00**(2011.01)i; **G06T 19/20**(2011.01)i; **G06T 3/00**(2006.01)i; **G06T 5/50**(2006.01)i; **G06F 3/01**(2006.01)i

According to International Patent Classification (IPC) or to both national classification and IPC

### B. FIELDS SEARCHED

Minimum documentation searched (classification system followed by classification symbols)

G06T 19/00(2011.01); G06F 111/18(2020.01); G06F 111/20(2020.01); G06F 17/50(2006.01); G06Q 30/06(2012.01); G06Q 50/08(2012.01); G06Q 50/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 증강 현실(augmented reality), 워핑(warping), 융합(fusion), 공간 뷰(space view), 객체 뷰(object view)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2022-0043653 A (JOHNNYLAB) 05 April 2022 (2022-04-05)<br>See paragraphs [0023]-[0056]. | 1-13 |
| Y | KR 10-2019-0132050 A (SEESAW CO., LTD.) 27 November 2019 (2019-11-27)<br>See paragraphs [0037]-[0038]. | 1-13 |
| Y | KR 10-2016-0033495 A (SOGANG UNIVERSITY RESEARCH & BUSINESS DEVELOPMENT FOUNDATION) 28 March 2016 (2016-03-28)<br>See paragraphs [0041]-[0049]. | 2-6,9-12 |
| A | US 2014-0236541 A1 (LEE, Hyoung Seob) 21 August 2014 (2014-08-21)<br>See claims 1 and 5. | 1-13 |
| A | KR 10-1980261 B1 (JEON, Dong-Ho) 21 May 2019 (2019-05-21)<br>See paragraphs [0031]-[0065] and figure 1. | 1-13 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 August 2023** | **11 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/006699**

| Patent document cited in search report | | | Publication date (day/month/year) | Patent family member(s) | | | Publication date (day/month/year) |
|---|---|---|---|---|---|---|---|
| KR | 10-2022-0043653 | A | 05 April 2022 | None | | | |
| KR | 10-2019-0132050 | A | 27 November 2019 | KR | 10-2049235 | B1 | 28 November 2019 |
| KR | 10-2016-0033495 | A | 28 March 2016 | None | | | |
| US | 2014-0236541 | A1 | 21 August 2014 | KR | 10-1273044 | B1 | 10 June 2013 |
| KR | 10-1980261 | B1 | 21 May 2019 | None | | | |

Form PCT/ISA/210 (patent family annex) (July 2022)